# EUROPÄISCHE PATENTSCHRIFT

(11) **EP 0 693 643 B1**
(45) Veröffentlichungstag und Bekanntmachung des Hinweises auf die Patenterteilung: **29.10.1997**
(21) Anmeldenummer: 95106992.1
(22) Anmeldetag: 09.05.1995
(51) Int. Cl.: F16H 61/14

(54) **Pulsweitenmoduliertes Magnetventil zum Steuern von hydrodynamischen Drehmomentwandlern automatischer Schaltgetriebe**
Pulse modulated magnetic control valve for a hydrodynamic torque converter of an automatic transmission
Soupape magnétique à modulation d'impulsions pour la commande d'un convertisseur de couple hydraudynamique d'une transmission automatique

(30) Priorität: 22.07.1994 DE 4426147
(43) Veröffentlichungstag der Anmeldung: 24.01.1996
(73) Patentinhaber: Ford-Werke Aktiengesellschaft, 50735 Köln (DE); FORD FRANCE S. A., 92506 Rueil-Malmaison (FR); FORD MOTOR COMPANY LIMITED, Brentwood, Essex CM13 3BW (GB)
(72) Erfinder: Wirtz, Hans-Peter, D-50769 Köln (DE)
(74) Vertreter: Neidl-Stippler, Cornelia, Dr.

(56) Entgegenhaltungen:
- DE-A- 4 028 548
- DE-A- 4 328 503
- US-A- 4 466 311

## Beschreibung

Die Erfindung betrifft ein pulsweitenmoduliertes Magnetventil zum Steuern von hydrodynamischen Drehmomentwandlern automatischer Schaltgetriebe mit einem elektromagnetischen Schaltelement und einem Ventilkörper nach dem Oberbegriff des Patentanspruches 1.

Automatische Schaltgetriebe von Kraftfahrzeugen sind im allgemeinen mit hydrodynamischen Drehmomentwandlern ausgestattet, wie sie bspw. in der EP-A-0433619 oder der EP-A-419782 oder allgemein in Gerigk, Bruhn, Danner "Kraftfahrzeugtechnik", Westermann-Verlag 2. Auflage, 89 Seite 349 bis 351 angegeben sind. Die hydrodynamischen Drehmomentwandler ermöglichen ein sanftes, ruckfreies Anfahren des Kraftfahrzeuges bei niedrigen Drehzahlen der Antriebswelle des Motors sowie ein weiches Schalten des automatischen Getriebes. Durch Verwendung hydrodynamischer Drehmomentwandler erfolgt eine geräuscharme, verschleißarme und stufenlose Übertragung des Motordrehmomentes auf das Getriebe.

Hydrodynamische Drehmomentwandler umfassen ein mit der Antriebswelle verbundenes Pumpenrad, ein sich über einen Freilauf abstützendes Leitrad und ein mit der in das Getriebe führenden Welle verbundenes Turbinenrad. Das Gehäuse des Drehmomentwandlers, in dem die vorgenannten Bauteile angeordnet sind, wird über ein Ölleitungssystem mit einer Druckflüssigkeit, im Kraftfahrzeugbereich meist Hydrauliköl, vollständig gefüllt. Der Druck im hydrodynamischen Drehmomentwandler wird über Steuerventile geregelt. Nachfolgend wird die Erfindung anhand von Hydrauliköl erläutert werden, wobei sie keineswegs auf Hydrauliköl als Druckmedium beschränkt ist.

Bei niedrigen Eingangsdrehzahlen überträgt das Pumpenrad die Bewegungsenergie auf das Hydrauliköl, das das Turbinenrad gleichfalls in Bewegung versetzt. Mit Hilfe des Leitrades wird der Ölstrom so umgelenkt, daß die Wirkung des Pumpenrades verstärkt wird. Dieser Schaltzustand des Drehmomentwandlers wird mit Unlock bezeichnet.

Bei hohen Drehzahlen verbindet eine zwischen dem mit dem Antrieb verbundenen Pumpenrad und dem Turbinenrad angeordnete Kupplungseinheit das Pumpenrad kraftschlüssig mit dem Turbinenrad. Dieser Schaltzustand wird mit Lock-Up bezeichnet.

Durch die kraftschlüssige Übertragung des Drehmomentes im Lock-Up wird ein unruhiges Verhalten des Antriebes direkt über den Drehmomentwandler auf das Getriebe übertragen, wodurch das Fahrverhalten des Fahrzeuges nachteilig beeinflußt wird.

Um eine ruckfreie Übertragung des Drehmomentes, insbesondere bei Getriebeschaltungen, auch im Lock-Up gewährleisten zu können, kann der Schlupf zwischen Pumpenrad und Turbinenrad variiert werden. Mit Hilfe von Steuerventilen wird der Druck der Hydraulikflüssigkeit innerhalb des Drehmomentwandlers verändert, so daß sich die Kupplungseinrichtung kurzzeitig öffnet. Dabei rutscht die Kupplung durch, d.h. der Schlupf zwischen Pumpenrad und Turbinenrad nimmt zu, und schlagartige, kurzfristige Drehmomentwechsel aufgrund unruhigem Antriebsverhaltens können somit ausgeglichen werden.

Zur Steuerung der Kupplungseinrichtung besitzt der hydrodynamische Drehmomentwandler zwei über ein Steuerventil angesteuerte Eingänge, die abhängig vom Schaltzustand der Kupplungseinrichtung mit unter Druck stehendem Hydrauliköl versorgt werden. Der erste der beiden Eingänge liegt direkt am Wandlergehäuse und beaufschlagt die Anlegeseite der Kupplung, während der zweite Eingang mit der Ablegeseite der Kupplungseinrichtung verbunden ist.

Bei niedrigen Drehzahlen des Turbinenrades liegt am ersten Eingang der Kupplungseinrichtung ein niedriger Druck an, während der zweite Eingang mit einem deutlich höheren Druck beaufschlagt ist. Der Druckunterschied zwischen den Eingängen führt zu einem Abrücken der Kupplungseinrichtung, die dadurch ausgekuppelt wird. Das über den zweiten Eingang in die Kupplungseinrichtung fließende Hydrauliköl strömt durch die Kupplungseinrichtung in das Wandlergehäuse und von dort über den ersten Eingang in das Leitungsnetz der Steuerungshydraulik (Unlock).

Ist der Schaltpunkt zwischen Unlock und Lock-Up erreicht, wird der erste Eingang mit einem deutlich höheren Druck beaufschlagt als der zweite Eingang. Der jetzt im Wandlergehäuse wirkende Druck preßt die Kupplungseinrichtung zusammen, so daß das Pumpenrad kraftschlüssig mit dem Turbinenrad verbunden ist (Lock-Up).

Um, wie oben erwähnt, den Schlupf zwischen Pumpenrad und Turbinenrad während des Lock-Ups gezielt regeln zu können, wird der am ersten Eingang des Wandlers wirkende Druck mit Hilfe des Steuerventils variiert.

Da das Hydrauliköl durch die fortgesetzte Bewegung Walkarbeit unterworfen ist, muß das Hydrauliköl mit Hilfe einer meist außerhalb des Wandlers angeordneten Kühleinrichtung ständig gekühlt werden. Die Abzweigung des Hydrauliköls zum Kühler wird gleichfalls durch ein Steuerventil geregelt, das häufig dasselbe ist, das auch den Fluß des Hydrauliköls zum Wandler regelt.

Wird der hydrodynamische Drehmomentwandler im Lock-Up geschaltet, werden gleichzeitig die Ölkanäle zum Drehmomentwandler und die Leitung zum Hydraulikölkühler durch das Steuerventil umgeschaltet.

Die Steuerung des Hydraulikölflusses, der in hydrodynamischen Drehmomentwandlern zum Antrieb der Turbinen- und Pumpenräder sowie zum Schalten der in den Drehmomentwandlern integrierten Kupplungen dient, erfolgt, wie oben angegeben, über Steuerventile, die meist pulsweitenmodulierte Magnetventile sind.

Pulsweitenmodulierte Magnetventile für hydrodynamische Drehmomentwandler sind bereits bekannt.

Sie umfassen ein elektromagnetisches Schaltelement und ein Steuerventil mit einem darin verschieblich angeordneten Steuerkolben, der die verschiedenen Ein- und Ausgänge des Steuerventils schließt bzw. öffnet. Am den elektromagnetischen Schaltelement zugewandten Ende des Ventilkörpers ist eine Steuerdruckkammer mit mehreren Ein- und Ausgängen angeordnet. An einem der Eingänge, dem Steuerdruck-Anschluß, der durch das elektromagnetische Schaltelement geöffnet und geschlossen wird, liegt ein im wesentlichen konstanter Steuerdruck von beispielsweise 8 bar an. Bei Betätigung des elektrischen Schaltelements wird der Steuerdruck-Anschluß geöffnet und der am Steuerdruck-Anschluß wirkende Steuerdruck verschiebt den Steuerkolben, wodurch ein mit der Steuerdruckkammer verbundener Wandlerkupplungs-Steuerdruck-Anschluß freigegeben wird. Über diesen Wandlerkupplungs-Steuerdruck-Anschluß strömt das Hydrauliköl in das Wandlergehäuse. Abhängig von der Öffnungsdauer des Steuerdruck-Anschlusses liegt der unmittelbar am Ausgang des Schaltelementes in der Steuerdruckkammer wirkende Druck zwischen 0 bar und dem maximalen Steuerdruck.

Das elektrische Schaltelement wird mit einer vorgegebenen Schaltfrequenz von beispielsweise 40 Hz betätigt, wobei die Öffnungsdauer des Steuerdruck-Anschlusses pro Schaltimpuls, die sogenannte Pulsweite, variiert werden kann. Durch Veränderung der Pulsweite, kann der auf die Kupplungseinrichtung wirkende Steuerdruck zwischen 0 bar und dem Maximalwert geregelt werden, um den zwischen Pumpenrad und Turbinenrad wirkenden Schlupf gezielt beeinflussen zu können. Bleibt der Steuerdruck-Anschluß über die gesamte Pulsweite geöffnet, wirkt der maximale Steuerdruck und die Kupplung bleibt geschlossen, während bei einer geringeren Öffnungsdauer der Steuerdruck im Wandlergehäuse entsprechend abnimmt.

Durch das kurzfristige, schnelle Öffnen des Steuerdruck-Anschlusses enstehen Druckspitzen, die sich über den Wandlerkupplungs-Steuerdruck-Anschluß bis in das Wandlergehäuse fortpflanzen. Dadurch kommt es bei geschalteter Kupplung zu von den Druckspitzen beeinflußten Drehmomentschwankungen und zu damit verbundenem unruhigem Fahrverhalten.

Bisher wurden zur Steuerung pulsweitenmodulierte Magnetventile verwendet, die keine Feder zur Erreichung einer "weichen" Endlage am schaltelementabgewandten Ende des Ventilgehäuses aufweisen .

So ist aus der DE-A-4 028 548 ein Schaltventil zur Ansteuerung einer Wandlerüberbrückungskupplung für ein Antomatikgetriebe eines Kraftfahrzeuges gemäß dem Oberbegriff des Anspruches 1 bekanntgeworden. Dabei erzeugt ein Solenoid einen pulsierenden Druck und der Ventilkolben wird über eine Feder in der Steuerdruckkammer abgefangen.

Aus der US-A-4 466 311 ist ebenfalls ein gattungsgemäßes federgedämpftes pulsweitenmoduliertes Magnetventil bekanntgeworden, bei dem eine Feder in der Gegendruckkammer angeordnet ist.

Diese Magnetventile arbeiten bereits zufriedenstellend, führen aber häufig zur Weiterleitung der Druckspitzen und den damit verbundenen Drehmomentschwankungen im Antrieb.

Dabei wird die Art der eingesetzten Feder nicht genauer erläutert.

Es ist daher Aufgabe der Erfindung, ein pulsweitenmoduliertes Magnetventil zu schaffen, das ein ruhigeres Fahrverhalten ermöglicht.

Die Aufgabe wird erfindungsgemäß durch ein gattungsgemäßes, pulsweitenmoduliertes Magnetventil mit den Merkmalen des Patentanspruches 1 gelöst.

Vorteilhafte Weiterbildungen ergeben sich aus den Unteransprüchen.

So ist es vorteilhaft, wenn das pulsweitenmodulierte Magnetventil einen mit der Steuerdruckkammer verbundenen Steuerdruck-Anschluß; einen über die Steuerdruckkammer mit einem Gemeinschaftsdruck-Ausgang und dem Steuerdruck-Anschluß verbundenen Wandlerkupplungs-Steuerungsdruck-Anschluß; einen über eine erste Arbeitskammer mit einem Kühler-Ausgang verbundenen Wandlerkupplungs-Versorgungsdruck-Anschluß; und einen über eine zweite Arbeitskammer mit einem Wandlerkupplungs-Gegendruck-Ausgang verbundenen Versorgungsdruck-Anschluß aufweist, da dadurch mehrere Anschlüsse gleichzeitig miteinander verbunden werden können und somit der Steuerungsaufwand sinkt.

Weiterhin kann es günstig sein, wenn das einströmende fluide Medium ein Druckmedium, wie Hydrauliköl, ist, da Hydrauliköl im allgemeinen inkompressibel ist und gleichzeitig schmierende Eigenschaften besitzt.

Es ist auch günstig, wenn die Gegenkraft des Federelements in Richtung des magnetischen Schaltelements in der Gegendruckkammer mit steigender Belastung wächst, da bei schnellen, hohen Beschleunigungen des Steuerkolbens eine höhere Gegenkraft erforderlich ist als bei geringer Beschleunigung des Steuerkolbens.

Bevorzugt entspricht die maximale Gegenkraft des Federelements in Richtung des elektromagnetischen Schaltelements in der Gegendruckkammer in etwa dem in der Steuerdruckkammer maximal wirkenden Steuerdruck, um einer Überbelastung des Federelements vorzubeugen.

Das Federelement kann aus Haltbarkeitsgründen bevorzugt im wesentlichen aus Metall, Keramik, Kunststoff, insbesondere einem faserverstärkten Kunststoff, oder Verbundmaterialien bestehen.

Vorteilhaft ist die Verwendung einer Druckfeder, insbesondere Schraubendruckfeder, als Federelement, da Druckfedern ein lineares Dämpfungsverhalten aufweisen.

Es kann günstig sein, eine Tellerfeder als Federelement zu verwenden, da Tellerfedern ein nichtlineares Verhalten besitzen und bei wachsender Belastung eine entsprechend überproportional steigende Gegenkraft aufweisen. Gleichzeitig sind sie in der Lage einen Teil der kinetischen Energie des Steuerkolbens aufgrund von Reibung in der Auflagefläche zu vernichten.

Durch pulsweitenmodulierte Magnetventile gemäß der Erfindung ist somit ein Abbau der Druckspitzen möglich, wodurch Drehmomentschwankungen im Wandler, die das Fahrverhalten des Kraftfahrzeugs negativ beeinflussen, vermieden werden können.

Das Federelement speichert einen Teil der während der Öffnungsdauer pro Schaltimpuls freiwerdenden hydraulischen Energie und gibt sie während der Schließdauer pro Schaltimpuls wieder ab. Dadurch werden Druckspitzen, die durch das plötzliche Öffnen des Steuerdruck-Anschlusses entstehen, gedämpft, wodurch Druckschwankungen innerhalb des Wandlergehäuses verringert und Sprünge bei der Drehmomentübertragung deutlich verkleinert werden.

Nachfolgend wird die Erfindung anhand einer bevorzugten Ausführungsform sowie der begleitenden schematischen Zeichnung näher erläutert, wobei sie keineswegs auf diese beschränkt ist. Dabei zeigt:
- Fig. 1: einen Längsschnitt durch eine erfindungsgemäße Ausführungsform eines pulsweitenmodulierten Magnetventils im Lock-Up;
- Fig. 2: eine Übersichtszeichnung über die Drucksteuerung eines hydrodynamischen Drehmomentwandlers in der Unlock;
- Fig. 3: eine Übersichtszeichnung über die Drucksteuerung eines hydrodynamischen Drehmomentwandlers im Lock-Up; und
- Fig. 4: ein Diagramm, das die Abhängigkeit der Druckschwankungen innerhalb des Wandlers von den Schwankungen des Steuerdrucks am Steuerdruck-Anschluß zeigt.

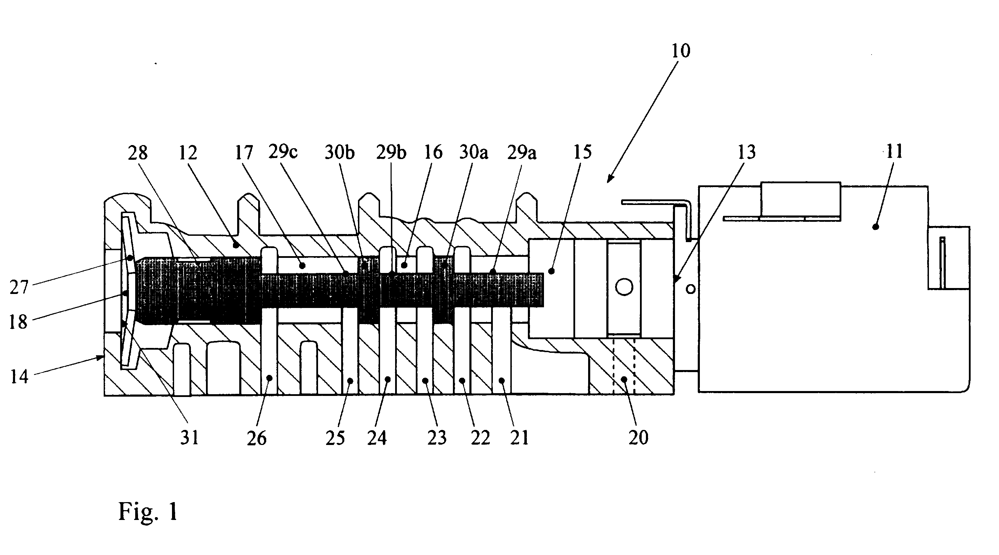

Eine bevorzugte Ausführungsform eines erfindungsgemäßen pulsmodulierten Magnetventils 10, wie in Fig. 1 dargestellt, umfaßt ein elektromagnetisches Schaltelement 11 und einen Ventilkörper 12. Der Ventilkörper 12 mit einem schaltelementzugewandten Ende 13 und einem schaltelementabgewandten Ende 14 weist eine sich längs in Richtung des schaltelementabgewandten Endes 14 erstreckende Langlochbohrung auf. Die Langlochbohrung ist durch am Umfang der Bohrung angeordnete Vertiefungen in eine am schaltelementzugewandten Ende 13 angeordnete Steuerdruckkammer 15 und zwei sich daran anschließende Arbeitskammern 16 und 17 sowie eine Gegendruckkammer 18 unterteilt.

Senkrecht zur Langlochbohrung verlaufende Bohrungen 20, 21, 22, 23, 24, 25 und 26 im Ventilkörper 12 dienen als Anschlüsse für verschiedene Hydraulikölleitungen.

Ein in der Langlochbohrung längs verschiebbar angeordneter Steuerkolben 28, dessen schaltelementzugewandtes Ende in die Steuerdruckkammer 15 ragt, weist über den Umfang verteilte Steuernuten 29a, 29b und 29c und Steuererhebungen 30a und 30b auf. Diese Steuernuten 29a, 29b und 29c können, je nachdem, ob das Magnetventil 10 "geöffnet" oder "geschlossen" ist, die verschiedenen Ausgänge und Anschlüsse 20, 21, 22, 23, 24, 25 und 26 über die Kammern 15, 16 und 17 miteinander verbinden.

Am schaltelementabgewandten Ende 14 ist eine Gegendruckkammer 18 angeordnet, in der eine den Steuerkolben 28 in Richtung des Schaltelementes 11 vorspannende Tellerfeder 27 untergebracht ist. Diese Tellerfeder 27 ermöglicht eine Bewegung des Steuerkolbens 28 im Lock-Up.

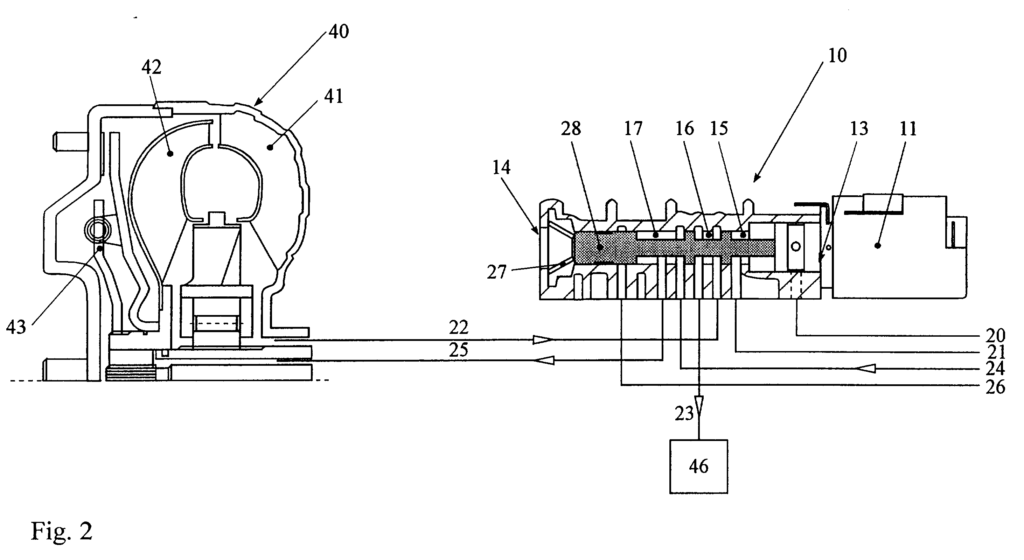

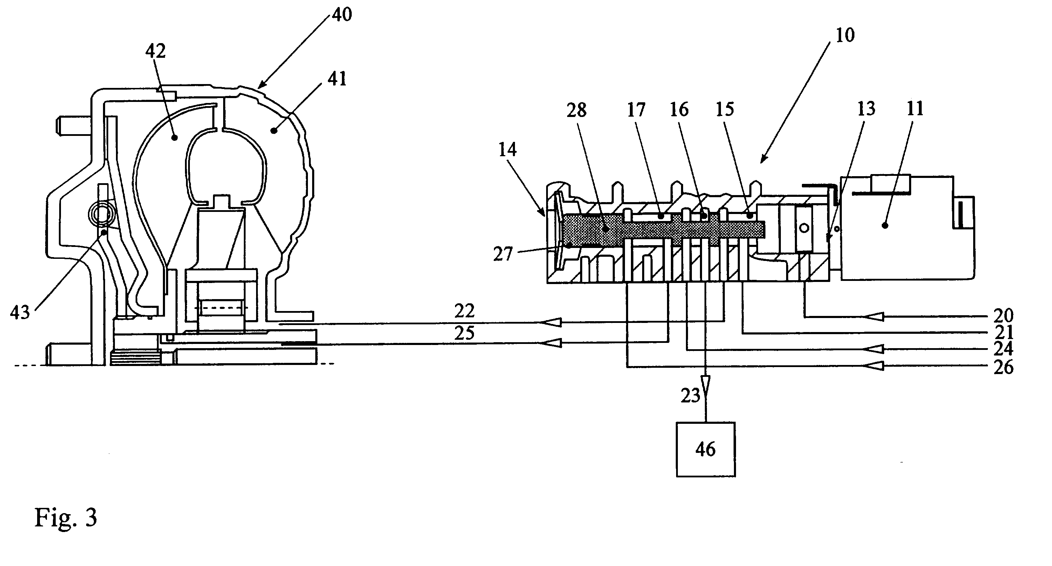

In Fig. 2 und 3 ist ein bekannter hydrodynamischer Drehmomentwandler 40 in Verbindung mit einem erfindungsgemäßen Magnetventil 10 gezeigt, wobei festzustellen ist, daß das erfindungsgemäße pulsweitenmodulierte Magnetventil 10 nicht auf diesen Typ hydrodynamischer Drehmomentwandler beschränkt ist. Der Drehmomentwandler 40 besitzt ein drehbar gelagertes Pumenrad 41 und ein im Wandlergehäuse drehbar gelagertes Turbinenrad 42. Eine Kupplungseinrichtung 43 ermöglicht eine kraftschlüssige Verbindung des Pumpenrades 41 mit dem Turbinenrad 42, um so im Lock-Up das vom Antrieb auf das Pumpenrad 41 übertragene Drehmoment ohne Verluste an das Turbinerad 42 weiterzuleiten.

In Fig. 2 ist die Drucksteuerung eines hydrodynamischen Drehmomentwandlers im Unlock gezeigt, in der das erfindungsgemäße Magnetventil 10 geschlossen ist. Bei geschlossenem Magnetventil 10 sperrt das elektromagnetische Schaltelement 11 den Steuerdruck-Anschluß 20, so daß der Steuerkolben 28 in Richtung des schaltelementzugewandten Endes 13 in der Langlochbohrung verschoben ist. Dadurch kann Hydrauliköl aus dem Wandler 40 durch den Wandlerkupplungs-Steuerdruck-Anschluß 22 über die durch die zweite Steuernut 29b gebildete Arbeitskammer 16 und den Kühler-Ausgang 23 in den Kühler 46 fließen.

Gleichzeitig ermöglicht der Steuerkolben 28 eine Verbindung des Wandlerkupplungs-Versorgungsdruck-Anschlusses 24, an dem ein Druck von bis ca. 8 bar anliegt, über die Arbeitskammer 17 mit dem Wandlerkupplungs-Gegendruck-Ausgang 25. Durch den am Wandlerkupplungs-Gegendruck-Ausgang 25 anliegenden Druck wird die im Drehmomentwandler 40 angeordnete Kupplungseinrichtung 43 geöffnet, so daß die kraftschlüssige Verbindung zwischen dem Pumpenrad 41 und dem Turbinenrad 42 gelöst ist. Da in der Leitung zwischen dem Wandlergehäuse und dem Wandlerkupplungs-Steuerdruck-Anschluß 22 ein geringerer Druck anliegt, strömt das Hydrauliköl aus dem Wandlerkupplungs-Gegendruck-Anschluß 25 über die Kupplungseinrichtung 43 in das Wandlergehäuse und von dort weiter über den Wandlerkupplungs-Steuerdruck-Anschluß 22 in den Kühler 46 (Unlock).

Fig. 3 zeigt den hydrodynamischen Drehmomentwandler im Lock-Up mit geöffnetem Magnetventil 10. Bei geöffnetem Magnetventil 10 öffnet das elektromagnetische Schaltelement 11 den Steuerdruck-Anschluß 20, an dem ein konstanter Druck von beispielsweise 8 bar anliegt. Durch das in die Arbeitskammer 15 fließende unter Druck stehende Hydrauliköl wird der Steuerkolben 28 in Richtung schaltelementabgewandtes Ende 14 verschoben. Dadurch entsteht eine Verbindung des Wandlerkupplungs-Steuerdruck-Anschlusses 22 mit dem Steuerdruck-Anschluß 20 über die Arbeitskammer 15. Das unter hohem Druck stehende Hydrauliköl aus dem Steuerdruck-Anschluß 20 strömt über den Wandlerkupplungs-Steuerdruck-Anschluß 22 in das Gehäuse des Drehmomentwandlers 40.

Gleichzeitig ermöglicht der Steuerkolben 28 eine Verbindung des Wandlerkupplungs-Gegendruck-Anschlusses 25 über die durch die dritte Steuernut 29c gebildete Arbeitskammer 17 mit dem Versorgungsdruck-Anschluß 26, an dem ein konstanter Druck von beispielsweise 1 bar anliegt. Dieser wirkt über den Wandlerkupplungs-Gegendruck-Anschluß 25 auf die Kupplungseinrichtung 43 im Gehäuse des Wandlers 40. Durch den über den Wandlerkupplungs-Steuerdruck-Anschluß 22 wirkenden hohen Druck wird die Kupplungseinrichtung 43 gegen den in der Kupplungseinrichtung 43 wirkenden Druck aus dem Wandlerkupplungs-Gegendruck-Anschluß 25 vorgespannt, so daß es zu einer kraftschlüssigen Verbindung des Pumpenrades 41 mit dem Turbinenrad 42 kommt.

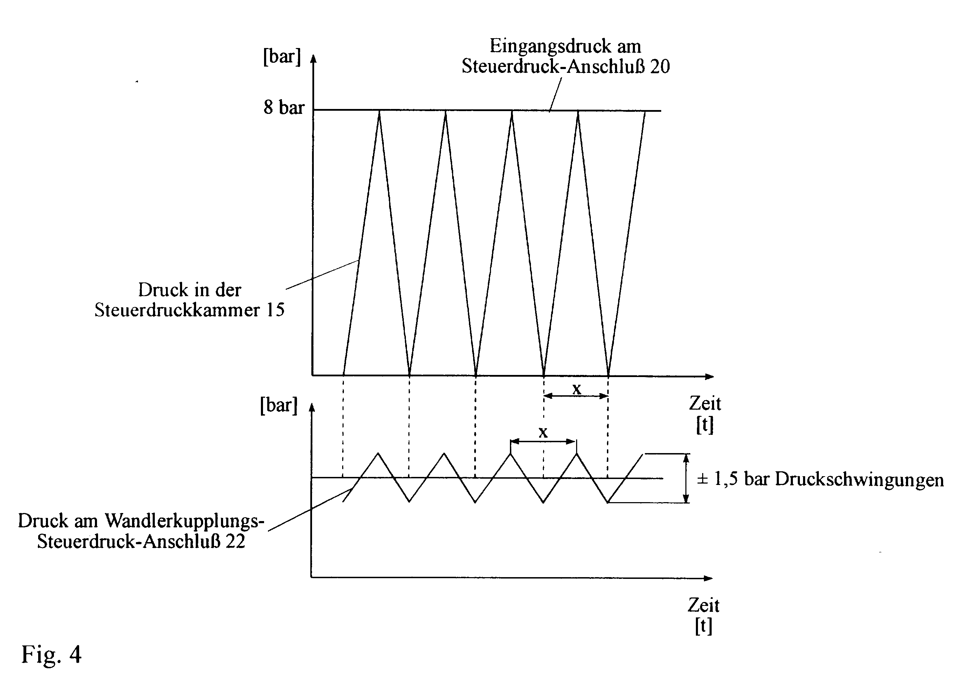

Fig. 4 zeigt den Zusammenhang zwischen dem Eingangsdruck am Steuerdruck-Anschluß 20, dem in der Steuerdruckkammer 15 wirkenden Druck und dem über den Wandlerkupplungs-Steuerdruck-Anschluß 22 auf die Kupplungseinrichtung 43 wirkenden Druck.

Pulsweitenmodulierte Magnetventile 10 werden mit einer Schaltimpulsfrequenz, die bei 20 bis 80 Hz, beispielsweise um 40 Hz, liegen kann, betrieben. Dabei öffnet und schließt das elektromagnetische Schaltelement 11 den Steuerdruck-Anschluß 20 bei jedem Schaltimpuls. Die Öffnungsdauer des Steuerdruck-Anschlusses 20 während eines Schaltimpulses - die sogenannte Pulsweite x - kann einen Zeitraum von 0 bis zur gesamten Dauer des Schaltimpulses umfassen. Ist eine Pulsweite von 0 % eingestellt, wird der Steuerdruck-Anschluß 20 während des gesamten Schaltimpulses nicht geöffnet. Liegt die Pulsweite bei 100 %, ist der Steuerdruck-Anschluß 20 während der gesamten Dauer des Schaltimpulses geöffnet. Durch Pulsweiten die zwischen 0 % und 100 % liegen, können Drücke eingestellt werden, die zwischen 0 und dem maximalen Steuerdruck von beispielsweise 8 bar liegen.

Durch das plötzliche Öffnen des Steuerdruck-Anschlusses 20 während eines Schaltimpulses treten schnell große Druckdifferenzen - sogenannte Druckspitzen - auf. Diese Druckspitzen werden durch die Steuerdruckkammer 15 über den Wandlerkupplungs-Steuerdruck-Anschluß 22 bis in den Drehmomentwandler 40 übertragen. Durch Verwendung der Tellerfeder 27 wirkt auf den Steuerkolben 28 eine Gegenkraft, die den Druckstößen entgegenwirkt. Mit zunehmendem Druck steigt die Gegenkraft der Tellerfeder 27, wodurch sich die Druckschwingungen nur mit reduzierter Amplitude aufbauen können. Bei kleinen Druckstößen ist dementsprechend die Ausweichbewegung des Steuerkolbens 28 durch die Tellerfeder 27 geringer als bei großen, plötzlichen Druckstößen. Die über den Wandlerkupplungs-Steuerdruck-Anschluß 22 an den Wandler 40 übertragenen Druckstöße sind gedämpft und bewirken ein ruhiges Drehmomentübetragungsverhalten des Wandlers 40.

Die Tellerfeder 27 ermöglicht so auf einfache Weise eine deutliche Verbesserung des Drehmomentübertragungsverhalten des Wandlers 40 bei plötzlich auftretenden, steuerungsbedingten Druckstößen.

Obwohl die Erfindung anhand eines bevorzugten Ausführungsbeispiels erläutert wurde, sind dem Fachmann Abwandlungen und Änderungen ohne weiteres ersichtlich, die ebenfalls unter den Schutzumfang der Ansprüche fallen. Dieser ist daher keineswegs auf die beschriebene Ausführungsform beschränkt.

## Patentansprüche

1. Pulsweitenmoduliertes Magnetventil zum Steuern von hydrodynamischen Drehmomentwandlern automatischer Schaltgetriebe mit einem elektromagnetischen Schaltelement (11) und einem Ventilkörper (12), der:
- eine Steuerdruckkammer (15) für ein fluides Medium mit einem Steuerdruck-Anschluß (20) und einem Ausgang (21), der mit mindestens einem Druck-Anschluß (22) verbindbar ist;
- einen Steuerkolben (28) mit mindestens einer Steuernut(29a, 29b,29c);
- mindestens einen mindestens eine Arbeitskammer (17, 18) mit mindestens einem Ausgang (23, 25) verbindenden zweiten Druckanschluß (24, 26); und
- mindestens eine Gegendruckkammer (18) am der Steuerdruckkammer (15) entgegengesetzten Ende des Ventilkörpers (12) aufweist;
gekennzeichnet durch:
- mindestens ein Federelement (27) in der Gegendruckkammer (18), das eine Gegenkraft zur Hemmung hoher Beschleunigungen des Steuerkolbens (28) bereitstellt;
- einen über die Steuerdruckkammer (15) mit dem Steuerkammer-Ausgang (21) und dem Steuerdruck-Anschluß (20) verbundenen Wandlerkupplungs-Steuerdruck-Anschluß (22);
- einen über eine erste Arbeitskammer (16) mit einem Kühler-Ausgang (23) verbundenen Wandlerkupplungs-Versorgungsdruck-Anschluß (24); und
- einen über eine zweite Arbeitskammer (17) mit einem Wandlerkupplungs-Gegendruck-Ausgang (25) verbundenen Versorgungsdruck-Anschluß (26),
wobei mindestens ein Druckanschluß (20, 22, 24, 26) mit mindestens einem Ausgang (21, 23, 25) durch eine Steuernut (29a, 29b, 29c) verbindbar ist, sodaß der Druckanschluß durch das Solenoid mit der Einspeisung zum Wandlerkupplungsgehäuse (40) verbindbar ist.

2. Pulsweitenmoduliertes Magnetventil nach Anspruch 1, dadurch gekennzeichnet, daß das einströmende fluide Medium ein Druckmedium, wie Hydrauliköl, ist.

3. Pulsweitenmoduliertes Magnetventil nach einem der vorangehenden Ansprüche, dadurch gekennzeichnet, daß die Gegenkraft des Federelements (27) in Richtung des elektromagnetischen Schaltelements (11) mit steigender Belastung wächst.

4. Pulsweitenmoduliertes Magnetventil nach einem der vorangehenden Ansprüche, dadurch gekennzeichnet, daß die maximale Gegenkraft des Federelements (27) in Richtung des elektromagnetischen Schaltelements (11) in etwa dem in der Steuerdruckkammer (15) maximal wirkenden Steuerdruck entspricht.

5. Pulsweitenmoduliertes Magnetventil nach einem der vorangehenden Ansprüche, dadurch gekennzeichnet, daß das Federelement (27) im wesentlichen aus Metall, Keramik, Kunststoff, insbesondere einem faserverstärkten Kunststoff, oder Verbundmaterialien besteht.

6. Pulsweitenmoduliertes Magnetventil nach einem der vorangehenden Ansprüche, dadurch gekennzeichnet, daß das Federelement (27) mindestens eine Druckfeder aufweist.

7. Pulsweitenmoduliertes Magnetventil nach einem der Ansprüche 1 - 6, dadurch gekennzeichnet, daß das Federelement (27) mindestens eine Tellerfeder aufweist.

## Claims

1. A pulse width modulated magnetic valve for the control of hydrodynamic torque converters of automatic transmissions, comprising an electromagnetic control element (11) and a valve body (12) which includes:
- a control pressure chamber (15) for a fluid medium, having a control pressure connection (20) and an outlet (21) which can be connected to at least one pressure connection (22);
- a control piston (28) having at least one control groove (29a, 29b, 29c);
- at least one second pressure connection (24, 26) connecting at least one working chamber (17, 18) to at least one outlet (23, 25); and
- at least one counterpressure chamber (18) at the opposite end of the valve body (12) to the control pressure chamber (15);
characterised by
- at least one spring element (27) in the counterpressure chamber (18) which furnishes a counterpressure to inhibit high accelerations of the control piston (28);
- a converter clutch control pressure connection (22) connecting the control chamber outlet (21) and the control pressure connection (20) by way of the control pressure chamber (15);
- a converter clutch supply pressure connection (24) connected by way of a first working chamber (16) to a cooler outlet (23); and
- a supply pressure connection (26) connected by way of a second working chamber (17) to a converter clutch counterpressure outlet (25),
wherein at least one pressure connection (20, 22, 24, 26) can be connected to at least one outlet (21, 23, 25) by way of a control groove (29a, 29b, 29c) so that the pressure connection can be connected by means of the solenoid to the feed to the converter clutch housing (40).

2. A pulse width modulated magnetic valve according to claim 1, characterised in that the inflowing fluid medium is a pressure medium such as hydraulic oil.

3. A pulse width modulated magnetic valve according to any preceding claim, characterised in that the counterforce of the spring element (27)acting towards the electromagnetic control element (11) increases with increasing load.

4. A pulse width modulated magnetic valve according to any preceding claim, characterised in that the maximum counterforce of the spring element (27) acting towards the electromagnetic control element (11) corresponds approximately to the maximum control pressure acting in the control pressure chamber (15).

5. A pulse width modulated magnetic valve according to any preceding claim, characterised in that the spring element (27) consists essentially of metal, ceramic, plastics material - in particular a fibre-reinforced plastics material - or composite materials.

6. A pulse width modulated magnetic valve according to any preceding claim, characterised in that the spring element (27) includes at least one pressure spring.

7. A pulse width modulated magnetic valve according to any of claims 1 - 6, characterised in that the spring element (27) includes at least one cup spring.

## Revendications

1. Electrovanne à modulation d'impulsions en largeur pour commander des convertisseurs de couple hydrodynamiques de transmissions automatiques, comprenant un élément électromagnétique de pilotage (11) et un corps de vanne ou de distributeur (12) qui comporte:
- une chambre de pression de pilotage (15) pour un milieu fluide, présentant un raccord de pression de pilotage (20) et une sortie (21) pouvant être reliée à au moins un raccord de pression (22);
- un piston ou tiroir de distribution (28) présentant au moins une gorge de distribution (29a, 29b, 29c);
- au moins un deuxième raccord de pression (24, 26) reliant au moins une chambre de travail (17, 18) à au moins une sortie (23, 25); et
- au moins une chambre de contre-pression (18) disposée à l'extrémité du corps de vanne (12) située à l'opposé de la chambre de pression de pilotage (15);
caractérisée par:
- au moins un élément élastique (27) disposé dans la chambre de contre-pression (18) et fournissant une force antagoniste pour freiner de fortes accélérations du tiroir (28);
- un raccord (22) de pression de commande de l'embrayage de convertisseur, raccord qui est relié à travers la chambre de pression de pilotage (15) à la sortie (21) de la chambre de pilotage et au raccord de pression de pilotage (20);
- un raccord (24) de pression d'alimentation de l'embrayage de convertisseur, raccord qui est relié à travers une première chambre de travail (16) à une sortie de refroidisseur (23); et
- un raccord de pression d'alimentation (26) relié à travers une seconde chambre de travail (17) à une sortie (25) de contre-pression de l'embrayage de convertisseur,
et dans laquelle au moins un raccord de pression (20, 22, 24, 26) peut être relié par une gorge de distribution (29a, 29b, 29c) à au moins une sortie (21, 23, 25), de sorte que le raccord de pression peut être relié par un solénoïde à l'alimentation menant au carter d'embrayage du convertisseur (40).

2. Electrovanne à modulation d'impulsions en largeur selon la revendication 1, caractérisée en ce que le milieu fluide entrant est un milieu de pression tel que de l'huile hydraulique.

3. Electrovanne à modulation d'impulsions en largeur selon une des revendications précédentes, caractérisée en ce que la force antagoniste de l'élément élastique (27), agissant en direction de l'élément électranagnétique de pilotage (11), croît à mesure que la charge augmente.

4. Electrovanne à modulation d'impulsions en largeur selon une des revendications précédentes, caractérisée en ce que la force antagoniste maximale de l'élément élastique (27), agissant en direction de l'élément électromagnétique de pilotage (11), correspond à peu près à la pression de pilotage agissant au maximum dans la chambre de pression de pilotage (15).

5. Electrovanne à modulation d'impulsions en largeur selon une des revendications précédentes, caractérisée en ce que l'élément élastique (27) est essentiellement en métal, céramique, matière plastique, en particulier en matière plastique renforcée par des fibres, ou en matériaux composites.

6. Electrovanne à modulation d'impulsions en largeur selon une des revendications précédentes, caractérisée en ce que l'élément élastique (27) comporte au moins un ressort de compression.

7. Electrovanne à modulation d'impulsions en largeur selon une des revendications 1 - 6, caractérisée en ce que l'élément élastique (27) comporte au moins une rondelle conique.
